# EUROPÄISCHE PATENTSCHRIFT

(11) **EP 0 843 443 B1**
(45) Veröffentlichungstag und Bekanntmachung des Hinweises auf die Patenterteilung: **11.07.2007**
(21) Anmeldenummer: 97117363.8
(22) Anmeldetag: 08.10.1997
(51) Int. Cl.: H04L 12/43, H04L 29/02, H04L 12/64, H04L 12/42, H04J 3/22, H04J 3/24

(54) **Verfahren zur Übertragung von Quell- und Steuerdaten in einem Kommunikationssystem mit Ringstruktur**
Method of transfer of source and control data in a ring communication system
Méthode de transport de données de contrôle et de données provenant d'une source dans un système de communication en anneau

(30) Priorität: 11.10.1996 DE 19642258
(43) Veröffentlichungstag der Anmeldung: 20.05.1998
(73) Patentinhaber: Harman Becker Automotive Systems GmbH, 76307 Karlsbad (DE); SMSC Europe GmbH, 76185 Karlsruhe (DE)
(72) Erfinder: Heck, Patrick, 76448 Durmersheim (DE); Hetzel, Herbert, 76889 Schwaigern (DE); Mauderer, Hans-Peter, 76571 Gaggenau (DE); Stiegler, Andreas, 76275 Ettlingen (DE)
(74) Vertreter: Patentanwälte Westphal, Mussgnug & Partner

(56) Entgegenhaltungen:
- EP-A- 0 510 290
- EP-A- 0 725 522

## Beschreibung

Die Erfindung betrifft ein Verfahren zur gemeinsamen Übertragung von digitalen Quell- und Steuerdaten zwischen Datenquellen und -senken, die Teilnehmer eines Kommunikationsnetzes mit Ringstruktur sind, wobei die Quell- und Steuerdaten in einem Format übertragen werden, welches eine getaktete Folge von einzelnen Bitgruppen gleicher Länge vorschreibt, in denen für Quell- und Steuerdaten, die in einem kontinuierlichen, zu einem Taktsignal synchronen Datenstrom übertragen werden, jeweils bestimmte Bitpositionen reserviert sind. Das Taktsignal wird von einem einzigen Teilnehmer generiert Alle anderen Teilnehmer synchronisieren sich auf dieses Taktsignal. Ein derartiges Verfahren ist beispielsweise aus der EP-A-0 725 522 bekannt. Davon zu unterscheiden sind rein paketorientierte Datenübertragungsverfahren wie z.B. ATM-Verfahreii4 d.h. asynchrone Übertragungsverfahren. Ein im Wesentlichen asynchrones Verfahren, bei dem ein zusammenhängender Bereich der Birtpositionen für Quell daten innerhalb einer Bitgruppe für Daten reservierbar ist, die in Datenpaketen übertragen werden, die jeweils einen Anfang und eine definierte Länge haben, und denen eine Teilnehmeradresse zugeordnet ist, ist aus der EP-A 0 510 290 bekannt.

Verfahren dieser Art werden überall dort eingesetzt, wo verschiedenartige elektrische und elektronische Geräte, die untereinander Informationen austauschen sollen, in teilweise komplizierter Weise mittels Datenleitungen miteinander vernetzt sind. So kann beispielsweise im Audiobereich die Kommunikation zwischen miteinander vernetzten Datenquellen einerseits, wie zum Beispiel CD-Spielern, Radioempfängern und Kassettenrekordern, und den damit verbundenen Datensenken andererseits, wie beispielsweise Verstärker-Lautsprecher-Kombinationen, durch ein solches Verfahren gesteuert werden. Dabei kann ein Gerät gleichzeitig als Datenquelle und senke ausgebildet sein, wie es beispielsweise bei einem Kassettenrekorder der Fall ist.

Aus der EP-A-0 725 522 ist es bekannt, verschledenartige Netzteilnehmer durch Lichtleiter miteinander zu verbinden, auf eine solche Weise, daß der Datenstrom nacheinander jeden Teilnehmer passiert. Es entsteht dann ein optisches Kommunikationsnetz mit Ringstruktur, mit besonderen Vorteilen insbesondere für mobile Anwendungen, etwa in Kraftfahrzeugen, und Anwendungen im Haushalt, etwa Multimedia-Netzwerke. Um in einem solchen Netz Daten zwischen einer Vielzahl von miteinander verbundenen Teilnehmern übertragen zu können, kann der Bereich innerhalb einer Bitgruppe, der für die Quelldaten reserviert ist, die in einem kontinuierlichen Datenstrom übertragen werden, in mehrere Teil-Bitgruppen gleicher Lange unterteilt werden, wobei abhängig von den Steuerdaten die jeder Teil-Bitgruppe zugewiesenen Quelldaten einem bestimmten Teilnehmer zugeordnet werden können. Die Tell-Bitgruppen bilden Kanäle, die jeweils einem bestimmten Teilnehmer auf unbestimmte Zeit zur Verfügung stehen.

Die für die erwähnten Verfahren typische DatenÜbertragung in einem zu einem Taktsignal synchronen Datenstrom ermöglicht eine einfache Verbindung mit Datenquellen und -senken, die ebenfalls kontinuierlich senden bzw. empfangen, wie es beispielsweise bei vielen Audio- und Videogoräten der Fall ist. Hinzu kommt, daß die heutigen Qualitätsanforderungen beispielsweise im Audiobereich im allgemeinen nur bei synchroner Datenübertragung mit akzeptablem Aufwand erfüllt werden können.

Mit den erwähnten Verfahren Können im Prinzip auch Daten übertragen werden, die von einem Gerät herrühren, das Daten in einem asynchronen Modus liefert, wie beispielsweise einem Faxgerät oder einem CD-ROM-Laufwerk. Zu diesem Zweck ist es erforderlich, die in Bursts oder Datenbündeln gelieferten Daten mit dem Taktsignal zu synchronisieren und die synchronisierten Daten über einen durch bestimmte Bitpositionen gebildeten Kanal zu übertragen, der dem Empfänger der Daten zugeordnet ist. Während der Zeit, in der er dem Empfänger zugeordnet ist, steht der Kanal für keine andere Daten zur Verfügung. Da die Zuordnung und Wiederfreigabe von Kanälen verhältnismäßig viel Zeit in Anspruch nimmt, wird Obertragungskapazität verschenkt. Durch kurze Lücken zwischen einzelnen Bursts oder Datenbündeln, die eine zwischenzeitliche Kanaltreigabe nicht erlauben, wird weitere Übertragungskapazität verschenkt.

In der erwähnten EP-A-0 725 522 wird vorgeschlagen, Fax-Daten oder andere formatfreie, d.h. uncodierte Daten Ober sogenannte transparente Kanäle zu übertragen, die in den für die Steuerdaten reservierten Bereichen vorgesehen sind. Diese Kanale stehen dann jedoch nur für einen ganz bestimmten Dienst zur Verfügung, und es bestehen die gleichen Nachteile wie zuvor erwähnt. Auch ist die Übertragungskapazität der fest reservierten transparenten Kanäle systembedingt beschränkt.

Aufgabe der Erfindung ist es, ein Verfahren zur Datenübertragung in einem Kommunikationsnetz mit Ringstruktur zu schaffen, das eine rationelle Übertragung sowohl von kontinuierlich als auch von bündelweise zugeführten Daten ermöglicht.

Diese Aufgabe wird bei einem gattungsgemäßen Verfahren erfindungsgemäß dadurch gelöst, daß ein beliebig großer zusammenhängender Bereich der Bitpositionen für die Quelldaten innerhalb einer Bitgruppe für Daten reservierbar ist, die in Datenpaketen übertragen werden, die jeweils einen Anfang und eine definierte Lange haben, und denen eine Teilnehmeradresse zugeordnet ist.

Die Größe des Bereichs für die Daten, die in Datenpaketen übertragen werden, kann in Abhängigkeit vom Bedarf der jeweiligen Anwendung eingestellt werden. Beispielsweise braucht in einem Kommunikationssystem, das lediglich kontinuierlich arbeitende Datenquellen enthält, zunächst überhaupt kein Platz für Daten in Paketen bereitgestellt werden. Wird dem System beispielsweise ein Fax-Gerät oder ein CD-ROM-Laufwerk hinzugefügt, so wird diesem Gerät ein ausreichend groBer Bereich an Bitpositionen für die in Paketen vorliegenden Quelldaten zur Verfügung gestellt. Werden dem System mehrere derartige Quellen hinzugefügt, so muß im allgemeinen weniger als die Summe der einzelnen Platzerfordemisse reserviert werden, da die mit einer eindeuligen Teilnehmeradresse gekennzeichneten Datenpakete einer Quelle unter Ausnutzung von Lücken zwischen den Datenpaketen einer anderen Quelle Übertragen werden können. Dieser grundsätzliche Vorteil von paketorientierten Übertragungsverfahren wird daher auch bei dem erfindungsgemäßen, grundsätzlich synchronen Übertragungsverfahren erreicht.

Eine Quelle von Datenpaketen schreibt aufeinanderfolgende Bits eines zu übertragenden Datenpaketes vorzugeweise in einander banachbarte Bitpositionen, die für die Daten reserviert sind, die in Datenpaketen übertragen werden. Debei werden diese Daten auf den Takt das Kommunikationsnetzes synchronisiert. Da die in Paketen übertragenen Daten jedoch bis zum Eintritt In das Netz asynchron sind, werden sie im folgenden der Einfachheit halber auch als asynchrone Daten bezeichnet, im Unterschied zu den Quelldaten, die in einem kontinuierlichen Datenstrom ohne definierte Länge übertragen werden und auch als synchrone Daten bezeichnet weiden.

Nach einer bevorzugten Ausführungsform wird die Teilnehmeradresse mit dem Anfang des Datenpaketes mit den asynchronen Daten übertragen. Dies ermöglicht eine einfache, kostengünstige und sichere Dekodierung der Adresse und damit eine sichere Übertragung der asynchronen Daten von deren Quelle zu deren Senke, welche durch die Teilnehmeradresse bestimmt ist.

Erfindungsgemäß bilden die reservierten Bitpositionen für die Quelldaten, die in einem kontinuierlichen Datenstrom übertragen werden, ebenso wie die Bitpositionen für die asynchronen Daten jeweils einen zusammenhängenden Bereich, wobei die beiden Bereiche für die synchronen und die asynchronen Daten aneinandergrenzen. Die beiden Bereiche zusammen nahmen vorzugsweise eine feste Anzahl von Bitpositionen innerhalb einer Bitgruppe ein. Der Bereich für synchrone Daten kann wiederum in mehrere Tell-Bitgruppen unterteilt werden, um mehrere Übertragungskanäle für synchrone Daten zu bilden.

Die Grenze zwischen den beiden Bereichen kann entsprechend der aktuellen Netzkonfiguration eingestellt werden, wie oben beschrieben. In einer Weiterbildung der Erfindung wird die Grenze zwischen dem Bereich für die Quelldaten, die in einem kontinuierlichen Datenstrom übertragen werden, und dem Bereich für die Daten, die In Datenpaketen übertragen werden, im laufenden Betrieb entsprechend der gerade benötigten Übertragungskapazitäten für synchrone bzw. asynchrone Daten eingestellt. Vorzugeweise werden dabei synchrone Daten vorrangig behandelt. Das heißt, daß zum Beispiel ein laufender Audiobetrieb auf keinen Fall unterbrochen wird, wenn eine datanintensive Navigationsnachricht von einem 8-tach-CD-ROM-Lautwerk zu übertragen ist, sondern as wird die Übertragungsgsschwindigkeit für die asynchronen Daten entsprechend der noch vorhandenen Übertragungskapazität herabgesetzt.

Durch die dynamische Aufteilung des Bereichs für Quelldaten In den Bitgruppen kann die vorhandene Gesamt-Übertragungskapazität in jedem Zeitpunkt optimal ausgenutzt werden. Die Größe der Bereiche bzw. die Lage der Grenze zwischen den beiden Bereichen für synchrone und asynchrone Daten ist in einem Datenfeld angegeben, das durch bestimmte Bitpositionen in jeder Bitgruppe gebildet wird. Aus den in diesem Datenfeld enthaltenen Informationen kann jeder Teilnehmer leicht das Ende des synchronen Datenfeldes und den Beginn des asynchronen Datenfeldes bestimmen.

In einer bevorzugten Ausführungsform werden für eine gesamte Bitgruppe 64 Bytes verwendet. Jeweils 16 aufeinanderfolgende Bitgruppen werden zu einem Block zusammengefaßt. Wie an sich bekannt, kann in jeder Bitgruppe innerhalb der für die Steuerdaten reservierten Bereiche ein Datenfeld als Präambel vorgesehen sein. Insbesondere zur Kennzeichnung des Beginns der Bitgruppe und gegebenenfalls eines Blockanfangs bzw. einer Zuordnung zwischen Teil-Bitgruppen und bestimmten Teilnehmern.

Innerhalb der für die Steuerdaten reservierten Bereiche werden 16 Kontroll-Bits vorgesehen, die zur Übertragung von Kontrollnachrichten verwendet werden können, wobei die Kontroll-Bits von Jeweils mehreren, insbesondere 16 aufeinanderfolgenden Bitgruppen zu einer kontrollnachricht zusammengelaßt werden.

Jeweils 60 Bytes einer Bitgruppe werden für Quelldaten vorgesehen. Aufgrund dieser großen Bylazahl ist es nicht notwendig, wie im sogenannten SPDIF-Format (Sony/Philips-Digital-Interface-Format) das sich mit der Entwicklung der CD-Spieler als Übertragungsformat durchgeseizt hat, separate Bitgruppen für linke und rechte Audiokanäle vorzusehen, sondern es können linke und rechte Audiokanäle jeweils einem durch eine Teil-Bilgruppe gebildeten Übertragungskanal zugeordnet werden. Dannoch lassen sich Daten leicht aus dem SPDIF-Format in das erfindungsgemäße Format und umgekehrt umwandeln.

In einer bevorzugten Ausführungsform wird in jeder Bitgruppe Innerhalb der für die Steuerdaten reservierten Bereiche einer bestimmten Bitposition eine Paritäts-Kennung zur Fehlererkennung zugewiesen. Außerdem wird In jeder Bitgruppe Innerhalb der für die Steuerdaten reservierten Bereiche ein mehrere, insbesondere 8 Bits umfassendes Datenfeld vorgesehen, das einen zählwert entsprechend der Position eines Teilnehmers in dem ringförmigen Kommunikationsnetz enthält. Dieser Zählwert ermöglicht Jedem Teilnehmer eine einfache Erkennung seiner Position im Ring, was für zeitkritische Anwendungen nützlich ist.

Die Codierung der einzelnen Bits erfolgt vorzugsweise mittels der bekannten Biphase-Codierung. Auf diese Welse kann das Taktsignal, eincodiert In das Datensignal, zusammen mit diesem innerhalb des Netzwerkes übertragen werden. Bevorzugt wird der Takt von irgendeinem Netzteilnehmer generiert, der als Taktgenerator arbeitet, wobei die übrigen Netzteilnehmer synchron zum Taktgenerator arbeiten, indem sie sich beispielsweise über PLL-Schaltungen an den empfangenen Takt anpassen.

Ein Datenpaket, das mehr Bitpositionen enthält als der Bereich einer Bitgruppe, der für die Daten reserviert ist, die in Datenpaketen übertragen werden, kann in den für die Datenpakete reservierten Bereichen mehrerer aufeinanderfolgender Bitgruppen übertragen werden. Um dies dem Empfänger des Datenpaketes anzuzeigen, wird in einer bevorzugten Ausführungsform ein Merker gesetzt, der eine oder mehrere bestimmte Bitpositionen innerhalb der für die Steuerdaten reservierten Bereiche umfaßt. Jeder Teilnehmer, der in einer Bitgruppe diesen Merker gesetzt findet, darf nicht in die für asynchrone Daten reservierten Bereiche der nächsten Bitgruppe schreiben. Jeder Teilnehmer, der gerade empfängt, erkennt anhand des gesetzten Merkers, daß die Übertragung noch nicht abgeschlossen ist, und gibt noch keine Empfangsbestätigung.

In einem Kommunikationsnetz mit Ringstruktur kopiert jeder Teilnehmer den Datenstrom sofort zum nächsten Teilnehmer. Beim Empfang und beim Senden der Datensignale durch einen Teilnehmer, gegebenenfalls unter Verarbeitung der Daten im Teilnehmer, entsteht jedoch eine kleine Verzögerung, die sich nach Durchlaufen einer Vielzahl von Teilnehmern zu einer merklichen Verzögerung aufsummiert. Um Datenkonfusionen oder Datenverluste aufgrund solcher Zeitverschiebungen zu vermeiden, nimmt der Taktgenerator die zu übertragenden Daten aus jeder am Taktgenerator ankommenden Bitgruppe heraus und kopiert sie in die darauf folgende Bitgruppe, so daß bei einem vollständigen Durchlauf des Rings eine Verzögerung entsteht, die genau der zeitlichen Länge einer Bitgruppe entspricht. Daher müssen beispielsweise für Kontrollnachrichten, die an Block- und Bitgruppengrenzen gebunden sind, Vorkehrungen getroffen werden, daß die Kontrollnachricht auch nach dem Passieren des Taktgenerators als solche erkannt wird. Ein geeignetes Verfahren dafür ist aus der EP-A-0 725 519 bekannt.

Für die Datenpakete in dem erfindungsgemäßen Übertragungsverfahren, die weder an Blockgrenzen noch an Bitgruppengrenzen gebunden sind und eine Adresse aufweisen, ist die Verzögerung im Taktgenerator an sich unproblematisch. Allerdings muß dafür gesorgt werden, daß der Sender eines Datenpaketes dieses aktiv aus dem Datenstrom herausnimmt bzw. den von dem Datenpaket belegten Platz wieder freigibt, nachdem es mit einer Bitgruppe Verzögerung wieder bei ihm angekommen ist, wenn keine weiteren Datenpakete zu senden sind (falls noch Daten zu senden sind, genügt es, wenn der Sender die bisher gesendeten Daten überschreibt). Andernfalls würde die belegte Bitgruppe für immer im Netz kreisen.

In einer bevorzugten Ausführungsform der Erfindung wird die Belegung des asynchronen Bereichs einer Bitgruppe mit Daten gekennzeichnet, indem am Beginn jedes asynchronen Bereichs eine Frei/Belegt-Kennung vorgesehen wird. Diese Kennung wird vom Sender eines Datenpaketes auf "Belegt" gesetzt, während er Daten sendet, und wieder auf "Frei" gesetzt, nachdem der Sender den letzten Teil seiner Daten gesendet hat. Danach steht die Bitgruppe wieder allen Sendern für asynchrone Daten im Netz zur Verfügung.

Eine alternative Möglichkeit zu verhindern, daß eine belegte Bitgruppe für immer im Netz kreist, besteht darin, daß ein bestimmter Teilnehmer, bevorzugt der Taktgenerator, jedes Datenpaket, das ihn passiert oder von ihm selbst gesendet wird, mit einer Markierung versieht. Der Taktgenerator löscht das Datenpaket oder hebt eine entsprechende Belegt-Kennung auf, wenn er zwei Datenpakete mit der gleichen Markierung erkennt.

Die Erfindung liefert ein Datenübertragungsverfahren für synchrone und für asynchrone Daten, das mit herkömmlichen synchronen Systemen kompatibel ist, ohne Übertragungskapazität zu verschenken. Dadurch kann die Übertragungsgeschwindigkeit selbst dann erhöht werden, wenn die Taktfrequenz nicht weiter erhöht werden kann, ohne Störstrahlung zu erzeugen, die wiederum nur mit erheblichem Aufwand unterdrückt werden könnte.

Gleichzeitig ist das erfindungsgemäße Datenübertragungsverfahren besonders wirtschaftlich. Zwar werden für das Einspeisen von asynchronen Daten in das Netz Puffer benötigt, aufgrund der Anpassungsfähigkeit des erfindungsgemäßen Datenübertragungsformates an die momentanen Verhältnisse im System kommt man aber mit verhältnismäßig wenig Pufferspeicher aus.

Aus den obigen Gründen findet das erfindungsgemäße Verfahren vorteilhafte Verwendung insbesondere bei stationären Kommunikationssystemen im Haushalt sowie bei mobilen Kommunikationssystemen in Kraftfahrzeugen.

Für die Leitungsabschnitte zwischen den einzelnen Teilnehmern werden bevorzugt Lichtleiter verwendet, die hohe Datenübertragungsgeschwindigkeiten ermöglichen. Im Falle eines Kommunikationssystems in einem Kraftfahrzeug ist außerdem das geringe Gewicht von Lichtleitern besonders vorteilhaft. Die Erfindung ist aber auch für rein elektrische ringförmige Kommunikationsnetze geeignet, bei denen die Leitungsabschnitte beispielsweise Koaxialkabel sind.

Die Erfindung wird nachfolgend anhand eines Ausführungsbeispiels unter Bezugnahme auf die Zeichnung erläutert; in dieser zeigt:
- Fig. 1: das für das erfindungsgemäße Verfahren verwendete Datenübertragungsformat in einem ringförmigen Kommunikationsnetz,
- Fig. 2: ein vier Netzteilnehmer umfassendes ringförmiges Netz,
- Fig. 3: die schematisch dargestellte Übertragung eines Datenpaketes von einem Netzteilnehmer zu einem anderen Netzteilnehmer des in Fig. 2 dargestellten Netzes,
- Fig. 4: das Datenpaket, wie es von den Netzteilnehmern nach Fig. 3 abgesandt bzw. empfangen wird,
- Fig. 5: die Übertragung eines Datenpaketes von einem Netzteilnehmer zu einem anderen Netzteilnehmer des in Fig. 2 dargestellten Netzes, wobei die Übertragung des Datenpaketes über den Taktgenerator erfolgt,
- Fig. 6: das Datenpaket, wie es von den Netzteilnehmern nach Fig. 5 abgesandt bzw. empfangen wird, und
- Fig. 7: eine schematische Ansicht zur Erläuterung der Aufteilung eines langes Datenpaketes auf aufeinanderfolgende Bitgruppen.

Eine Bitgruppe 1, die auch Frame genannt wird, umfaßt 64 Bytes, d.h. 512 Bits. Dies ist ein geradzahliges Vielfaches der Längen von Bitgruppen in bekannten Übertragungsformaten für synchrone Daten, insbesondere dem SPDIF-Format oder dem aus der EP-A-0 725 522 bekannten Format, so daß wegen der einfachen Umwandelbarkeit Kompatibilität mit diesen Formaten gegeben ist.

Die Bitgruppe 1 enthält eine Präambel 2, die vier Bitpositionen 3 umfaßt. Die Präambel 2 ermöglicht der PLL-Schaltung eines Teilnehmers das Aufsynchronisieren auf einen empfangenen Takt. Jeweils 16 Bitgruppen 1 sind zu einem Block zusammengefaßt, wobei die erste Präambel 2 jedes Blocks ein spezielles Block-Kennzeichnungsbit enthält.

An die Präambel 2 schließt sich ein Datenfeld 4 an, das vier Bitpositionen 5 umfaßt und dessen Funktion weiter unten erläutert wird.

An das Datenfeld 4 schließt sich ein Bereich 6 für synchrone Daten an. Der Bereich 6 kann auf eine bekannte Art und Weise in mehrere Teil-Bitgruppen 7 gleicher Länge unterteilt sein, die jeweils einem bestimmten Teilnehmer zugeordnet sind. Die Zuordnung zwischen den Teil-Bitgruppen 7 und den jeweiligen Teilnehmern wird in der Präambel 2 festgehalten.

An den Bereich 6 für synchrone Daten schließt sich ein Bereich 8 für asynchrone Daten an. Der Bereich 6 für synchrone Daten und der Bereich 8 für asynchrone Daten belegen zusammen 60 Bytes der Bitgruppe 1. Die Gesamt-Übertragungskapazität des Netzes für synchrone und asynchrone Quelldaten wird durch diese 60 Bytes gebildet. Die Größe des Bereichs 8 für asynchrone Daten kann 0, 4, 8, ... 56 oder 60 Bytes betragen und wird durch einen Wert ASY (ASY=0, 1, 2, ... 15) festgelegt, der in dem Bereich 4 gespeichert ist, der dem Bereich 6 für synchrone Daten vorhergeht. Der Bereich 6 für synchrone Daten umfaßt dementsprechend 60 - (4 x ASY) Bytes.

Dem Bereich 8 für asynchrone Daten folgt ein 16 Bits oder 2 Bytes großes Datenfeld 9 für Kontroll-Bits. Die Kontroll-Bits eines Blocks, d.h. 32 Bytes oder 192 Bits, bilden eine Kontrollnachricht.

An das Datenfeld 9 für Kontroll-Bits schließt sich ein Datenfeld 10 an, das aus 6 Bits besteht. Ein taktgebender Teilnehmer oder Taktgenerator schreibt eine "0" in das Datenfeld 10, und der Wert im Datenfeld 10 wird von jedem folgenden Teilnehmer im Ring um Eins erhöht, so daß jeder Teilnehmer von in diesem Fall maximal 64 Teilnehmern unmittelbare Kenntnis von seiner Position im Ring hat.

Dem Datenfeld 10 folgt eine einzelne Bitposition 11, mit der angezeigt wird, ob sich ein Datenpaket im Bereich 8 für asynchrone Daten in einer auf die Bitgruppe 1 folgenden Bitgruppe fortsetzt oder nicht. Der Bitposition 11 folgt eine Bitposition 12 für ein I'aritäts-Bit zur Fehlererkennung.

Die Bereiche 6 und 8 jeder Bitgruppe 1 sind für synchrone bzw. asynchrone Quelldaten reserviert, und die Datenfelder 2, 4, 9, 10 und die beiden einzelnen Bitpositionen 11 und 12 sind für synchrone Steuerdaten reserviert.

Man beachte, daß die Aufteilung der Bitgruppe 1 zugunsten einer detaillierten Darstellung einzelner Bitpositionen nicht maßstabsgetreu gezeichnet ist.

Ein Datenpaket 13, das von einem paketorientiert arbeitenden Teilnehmer über das Netz übertragen werden soll, wird auf eine solche Weise in den Bereich 8 für asynchrone Daten eingefügt, daß es an der Grenze 14 zwischen dem Bereich 6 für synchrone Daten und dem Bereich 8 für asynchrone Daten beginnt, wie mit gestrichelten Linien dargestellt. Das Datenpaket 13 enthält einen Kopfbereich 15, der die Adresse eines am Netz angeschlossenen Empfängers des Datenpaketes 13 enthält. Falls der sendende Teilnehmer ein Gerät ist, das Datenpakete ohne Adressen ausgibt, ist jedem dieser Datenpakete eine Adresse hinzuzufügen. Dies kann leicht in einer Schnittstelle zwischen dem Teilnehmer und dem Netz durchgeführt werden.

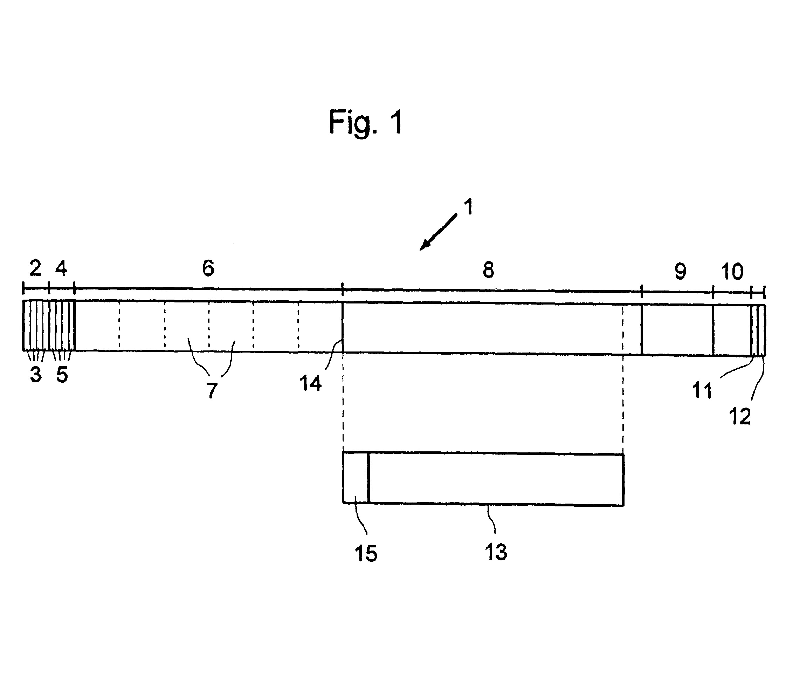

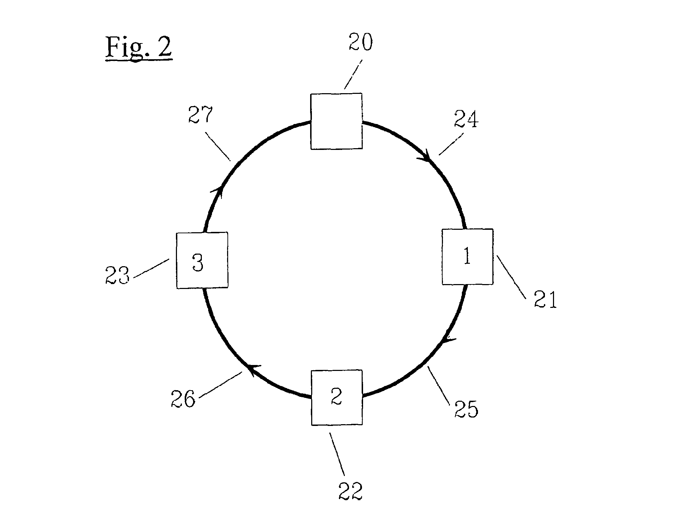

In dem in Fig. 1 dargestellten Beispiel ist das Datenpaket 13 etwas kürzer als der Bereich 8 für asynchrone Daten, so daß es in einer einzigen Bitgruppe 1 übertragen werden kann. Im Falle, daß ein Datenpaket länger als der Bereich 8 für asynchrone Daten in einer Bitgruppe 1 ist, wird der Rest des Datenpaketes in der auf die Bitgruppe 1 folgenden Bitgruppen und gegebenenfalls weiteren Bitgruppen übertragen, was durch den Merker an der Bitposition 11 angezeigt wird. Die Übertragung eines Datenpaketes, das länger als der Bereich 8 für asynchrone Daten in einer Bitgruppe 1 ist, wird weiter unten unter Bezugnahme auf Fig. 2 bis 7 näher erläutert.

Die dynamische Verwaltung der Grenze 14 zwischen dem Bereich 6 für synchrone Daten und dem Bereich 8 für asynchrone Daten wird anhand des folgenden Beispiels erläutert.

In einem ringförmigen Kommunikationsnetz in einem Kraftfahrzeug sind ein Radioempfänger, ein CD-Spieler, ein Mobiltelefon, ein Ein-/Ausgabegerät für Sprache, ein Navigationssystem, das einen GPS-Empfänger und ein 8-fach-CD-ROM-Laufwerk als Datenbank für Kartenmaterial umfaßt, mehrere Verstärker-Lautsprecher-Kombinationen sowie ein Bildschirm über Lichtleiter miteinander verbunden.

Man nehme an, daß in dem Kommunikationsnetz zunächst nur der Radioempfanger und die Verstärker-Lautsprecher-Kombinationen aktiv sind, und daß zunächst 60 Bytes für die Übertragung von synchronen Quelldaten reserviert sind. Das heißt, der Bereich 8 für asynchrone Daten umfaßt null Bytes. Die Audiodaten aus dem Radioempfänger werden über einige der durch die Teil-Bitgruppen 7 gebildeten Kanäle an die Verstärker-Lautsprecher-Kombinationen übertragen, wobei der größte Teil der 60 Bytes Übertragungskapazität frei bleibt.

Wird nun beispielsweise das Navigationssystem aktiviert, so wird der Bereich 6 für synchrone Daten automatisch soweit verkleinert, daß darin gerade noch genügend Übertragungskapazität für die Audiodaten und für Videodaten vom Navigationssystem an den Bildschirm übrig bleibt. Der Bereich 8 für asynchrone Daten wird entsprechend vergrößert, so daß verhältnismäßig viel Kapazität für die datenintensive paketweise Kommunikation zwischen dem Navigationssystem und dem CD-ROM-Laufwerk zur Verfügung steht. Synchrone Quelldaten genießen jedoch Priorität gegenüber asynchronen Daten Das heißt, falls zwischenzeitlich auf einem Telefon mit Synchronbetrieb ein Anruf eingeht, wird der Bereich 6 für synchrone Daten automatisch wieder entsprechend vergrößert.

Fig. 2 zeigt ein ringförmiges Netz mit einem als Taktgenerator eingesetzten Teilnehmer 20 und drei weiteren Teilnehmern 21, 22 und 23. Die vier Teilnehmer 20, 21, 22 und 23 sind über Lichtleiterabschnitte 24, 25, 26, und 27 ringförmig miteinander verbunden. Die physikalische Richtung der Datenübertragung ist durch Pfeile auf den Lichtleiterabschnitten dargestellt.

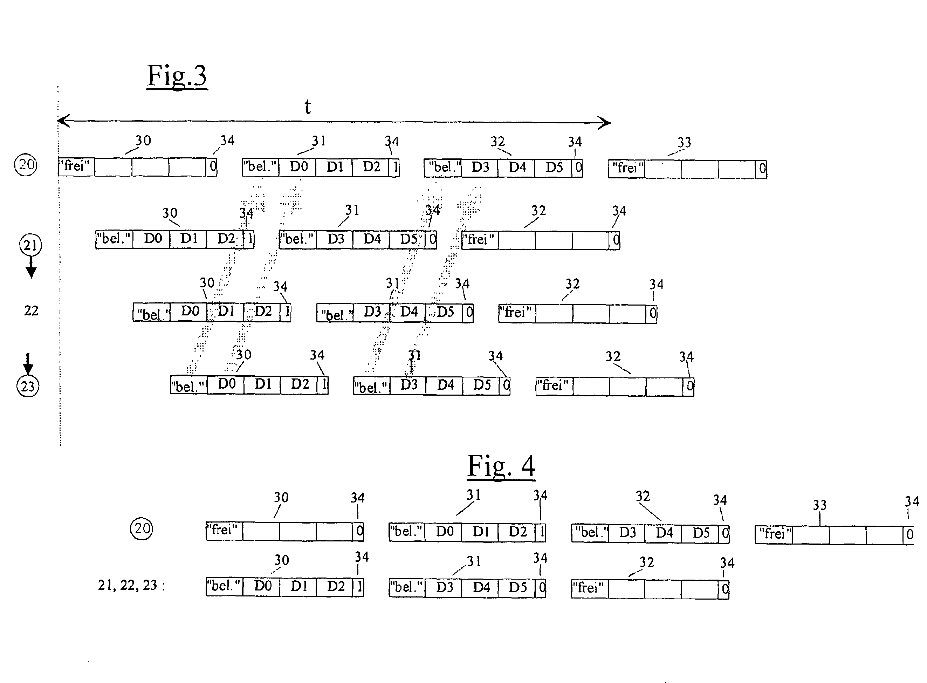

In Fig. 3 ist eine Übertragung von asynchronen Daten vom Teilnehmer 21 zum Teilnehmer 23 dargestellt, wobei die Übertragung nicht über den Taktgenerator 20 erfolgt. Der Taktgenerator 20 sendet in bestimmten Zeitabständen Bitgruppen, wobei in Fig. 3 vier Bereiche 30, 31, 32 und 33 für asynchrone Daten von vier aufeinanderfolgenden Bitgruppen eingezeichnet sind. Der vom Taktgenerator 20 gesendete Bereich 30 ist leer, was mit einer "Frei"-Kennung unmittelbar am Beginn des Bereichs 30 angezeigt wird. Der Teilnehmer 21 erkennt, daß der Bereich 30 frei ist, und prüft seinen eigenen Sendestatus. Im Falle einer Sendeanforderung kennzeichnet der Teilnehmer 21 den Bereich 30 als belegt und beginnt sofort, über den Bereich 30 eine Adresse D0 und Daten D1 und D2 zu senden. In dem hier gezeigten Beispiel ist die zu übertragende Datenmenge größer als die in einem Bereich für asynchrone Daten einer Bitgruppe enthaltene Anzahl freier Bytes, weshalb der Teilnehmer 21 ein Bit 34 auf "1" setzt. Das Bit 34 entspricht der Bitposition 11 im Bitgruppenformat von Fig. 1, ist hier aber der Übersichtlichkeit wegen unmittelbar im Anschluß an den Bereich 30 eingezeichnet. Das gesetzte Bit 34 signalisiert allen weiteren Teilnehmern, daß sich das Datenpaket in der nächsten Bitgruppe bzw. deren Bereich für asynchrone Daten fortsetzt. Die nachfolgenden Teilnehmer versuchen dann gar nicht erst in diesen Bereich zu schreiben bzw. erhalten diesen Bereich nicht zugeteilt, falls die Zuteilung von einer Zentrale aus erfolgt. Weiterhin signalisiert das gesetzte Bit 34 dem Empfänger des Datenpaketes, hier dem Teilnehmer 23, daß er über die Bitgruppengrenze hinweg in Empfangsbereitschaft bleiben muß.

Der Teilnehmer 22 erkennt den belegten Bereich 30, prüft die Adresse D0, erkennt, daß keine Übereinstimmung vorliegt und verhält sich transparent, wobei lediglich eine kleine Verzögerung entsteht.

Der Teilnehmer 23 erkennt seine Adresse D0 im Bereich 30 und beginnt mit dem Empfang.

Der Taktgenerator 20 empfängt die von ihm generierte und nun im Bereich 30 mit den Sendedaten vom Teilnehmer 21 belegte Bitgruppe mit einer von der Netzgröße abhängigen Verzögerung. Der Inhalt des empfangenen Bereichs 30 wird (ebenso wie der übrige Inhalt der Bitgruppe, in der der Bereich 30 enthalten ist) in den Bereich 31 für asynchrone Daten der nächsten Bitgruppe kopiert, wie mit schraffierten Pfeilen angedeutet. Zu diesem Zweck verfügt der Taktgenerator 20 über einen entsprechend großen Zwischenspeicher.

Der Teilnehmer 21 überschreibt dann die Daten D0, D1 und D2 mit Folgedaten D3, D4 und D5. Angenommen, daß dies der letze Teil der zu sendenden Daten ist, setzt der Teilnehmer 21 das Bit 34 wieder auf "0", um zu signalisieren, daß der Bereich für asynchrone Daten der nächsten Bitgruppe wieder anderen Teilnehmern zum Senden zur Verfügung steht.

Die Bitgruppe wird dann vom Teilnehmer 22 ohne Veränderung des Bereichs 21 an den empfangenden Teilnehmer 23 und von dort an den Taktgenerator 20 übertragen, der den Inhalt des Bereichs 31 in den Bereich 32 der nächsten von ihm generierten Bitgruppe kopiert. Wenn der Teilnehmer 21 diese Bitgruppe empfängt, setzt er die "Belegt"-Kennung wieder auf "Frei". Dies verhindert, daß diese Bitgruppe für immer als mit asynchronen Daten belegt im System kreist, wenn der Taktgenerator 20 wie in diesem Beispiel grundsätzlich den Inhalt der letzten empfangenen Bitgruppe in die nächste Bitgruppe kopiert, ohne Bewertung deren Inhalts. Die Übertragung des gesamten Datenpaketes nimmt eine Zeit t in Anspruch

Fig. 4 zeigt die Bereiche 30, 31, 32 und 33 für asynchrone Daten in den aufeinanderfolgenden Bitgruppen, wie sie bei der Übertragung von Fig. 3 von den einzelnen Teilnehmern gesehen werden.

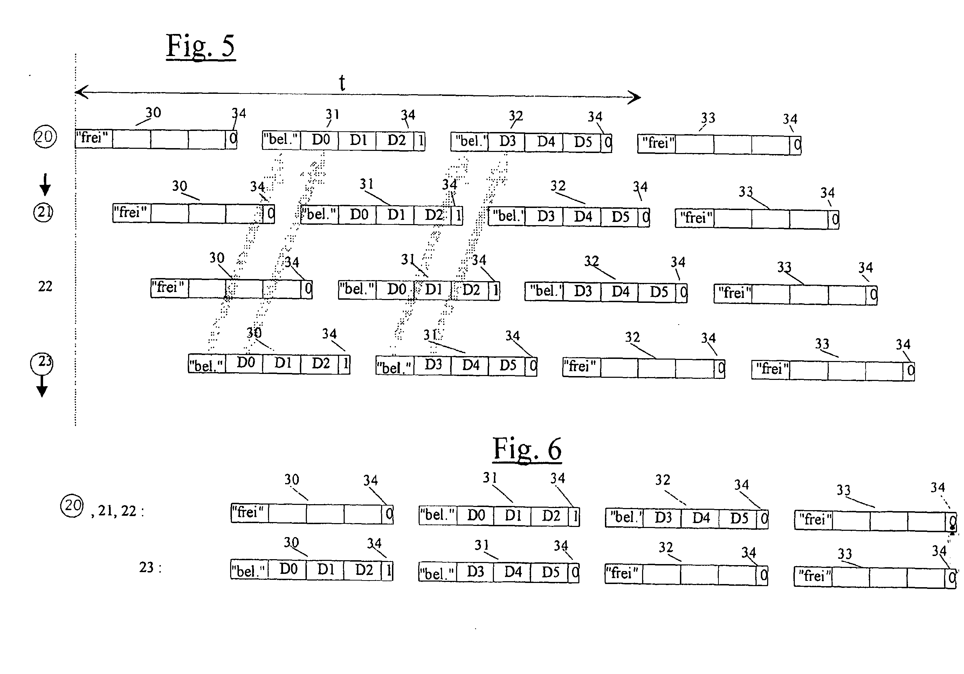

In Fig. 5 ist der Fall dargestellt, daß die Übertragungsstrecke vom Sender, in diesem Fall dem Teilnehmer 23, zum Empfänger, der in diesem Fall der Teilnehmer 21 ist, über den Taktgenerator 20 führt. Der Taktgenerator 20 generiert wieder einen Bitstrom, der keine asynchronen Daten enthält. Die Teilnehmer 21 und 22 erkennen den freien Bereich 30 und prüfen ihre eigenen Sendestati. Da bei beiden Teilnehmern 21 und 22 keine Sendeanforderung vorliegt, geben sie die Bitgruppe mit dem Bereich 30 transparent weiter.

Der Teilnehmer 23 möchte jedoch senden, weshalb er die "Belegt"-Kennung setzt und sofort beginnt, Daten zu senden. Da die zu übertragende Datenmenge größer als die in einem Bereich für asynchrone Daten einer Bitgruppe enthaltene Anzahl freier Bytes ist, setzt er das Bit 34.

Der Taktgenerator 20 empfängt die von ihm generierte und nun im Bereich 30 mit den Sendedaten vom Teilnehmer 21 belegte Bitgruppe mit einer von der Netzgröße abhängigen Verzögerung. Der Inhalt des empfangenen Bereichs 30 der wiederempfangenen Bitgruppe wird wie in dem Beispiel von Fig. 3 in den Bereich 31 für asynchrone Daten der nächsten generierten Bitgruppe kopiert.

Der Teilnehmer 21 erkennt den belegten Bereich 31 um eine Bitgruppe verzögert bezogen auf den Taktgenerator 20, erkennt seine Adresse D0 und beginnt mit dem Fmpfang.

Wenn der Teilnehmer 23 den letzten Teil seiner Daten sendet, setzt er das Bit 34 wieder auf "0", um zu signalisieren, daß der Bereich für asynchrone Daten der nächsten Bitgruppe wieder anderen Teilnehmern zum Senden zur Verfügung steht.

Der Teilnehmer 23 empfängt die von ihm gesendeten Daten im Bereich 32 der nachsten Bitgruppe, in den sie vom Taktgenerator 20 kopiert worden sind, und setzt deren "Belegt"-Kennung wieder auf "Frei". Die Bitgruppe mit dem freien Bereich wird ebenso wie im Beispiel von Fig. 3 mit einer Verzögerung von einer Bitgruppe erkannt

Fig. 6 zeigt die Bereiche 30, 31, 32 und 33 für asynchrone Daten in den aufeinanderfolgenden Bitgruppen, wie sie bei der Übertragung von Fig 5 von den einzelnen Teilnehmern gesehen werden.

In den Fällen, in denen die Daten nicht über den Taktgenerator 20 übertragen werden, wie in dem Beispiel von Fig. 3 und 4 gezeigt, erkennt ein Teilnehmer eine für ihn bestimmte Nachricht in derselben Bitgruppe, in die sie ein sendender Teilnehmer hineinlegt, und den Fällen, in denen die Daten über den Taktgenerator 20 übertragen werden, wie in dem Beispiel von Fig. 5 und 6 gezeigt, erkennt ein Teilnehmer eine für ihn bestimmte Nachricht in darauf folgenden Bitgruppe.

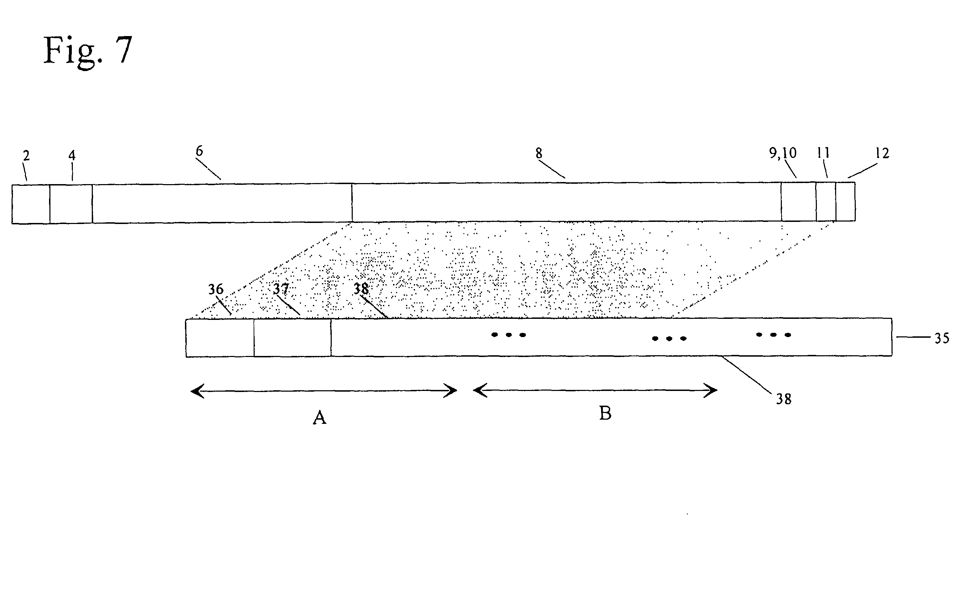

Fig. 7 zeigt ein Datenpaket 35, das eine Frei/Belegt-Kennung 36, eine Adresse 37 sowie Daten 38 enthält und das länger als der Bereich 8 für asynchrone Daten einer Bitgruppe ist, die der Bitgruppe 1 von Fig. 1 entspricht. Das Datenpaket 35 wird in Stücke A, B, ... zerlegt, deren Länge maximal der Länge eines Bereichs 8 für asynchrone Daten entspricht, und die einzelnen Stücke werden in jeweils eine Bitgruppe eingefügt, wie schematisch gezeigt, wobei in jeder Bitgruppe außerdem die Bitposition 11 auf "1" gesetzt wird, solange das Datenpaket 35 noch nicht vollständig in Bitgruppen untergebracht worden ist, und danach auf "0" gesetzt wird.

## Patentansprüche

1. Verfahren zur gemeinsamen Übertragung von digitalen Quell- und Steuerdaten zwischen Datenquellen und -senken, die Teilnehmer eines Kommunikationsnetzes mit Ringstruktur sind, wobei die Quell- und Steuerdaten in einem Format übertragen werden, welches eine getaktete Folge von einzelnen Bitgruppen gleicher Länge vorschreibt, in denen für Quell- und Steuerdaten, die in einem kontinuierlichen, zu einem Taktsignal synchronen Datenstrom übertragen werden, jeweils bestimmte Bitpositionen reserviert sind, **dadurch gekennzeichnet, dass** ein zusammenhängender Bereich (8) von Bitpositionen für die Quelldaten innerhalb einer Bitgruppe (1) für Daten reservierbar ist, die in Datenpaketen (13) übertragen werden, die jeweils einen Anfang und eine definierte Länge haben und denen eine Teilnehmeradresse (15) zugeordnet ist, dass die reservierten Bitpositionen für die Quelldaten, die in einem kontinuierlichen Datenstrom übertragen werden, einen zusammenhängenden Bereich (6) bilden und dass der Bereich (8) für die Quelldaten, die in einem kontinuierlichen Datenstrom übertragen werden, und der Bereich (8) für die Daten, die in Datenpaketen übertragen werden, aneinandergrenzen und dass in jeder Bitgruppe (1) ein Datenfeld (4) für Informationen in Bezug auf die Größe des Bereichs (6) für Quelldaten in einem kontinuierlichen Datenstrom oder die Größe des Bereichs (8) für die Daten in Datenpaketen (13) vorgesehen wird.

2. Verfahren nach Anspruch 1, **dadurch gekennzeichnet, dass** die Teilnehmeradresse (15) dem Anfang der Datenpakete (13) zugeordnet ist.

3. Verfahren nach Anspruch 1 oder 2, **dadurch gekennzeichnet, dass** ein Teilnehmer, der Datenpakete sendet, aufeinanderfolgende Bits eines zu übertragenden Datenpaketes in einander benachbarte Bitpositionen schreibt, die für Daten reserviert sind, die in Datenpaketen (13) übertragen werden.

4. Verfahren nach Anspruch 3, **dadurch gekennzeichnet, dass** ein Datenpaket, das mehr Bitpositionen enthält als der Bereich (8) einer Bitgruppe (1), der für Daten reserviert ist, die in Datenpaketen übertragen werden, in den für Datenpakete reservierten Bereichen mehrerer aufeinanderfolgender Bitgruppen übertragen wird.

5. Verfahren nach Anspruch 4, **dadurch gekennzeichnet, dass** in einer Bitgruppe (1), in der Daten eines Datenpaketes übertragen werden, das sich in einer darauf folgenden Bitgruppe fortsetzt, ein Merker (11) gesetzt wird, der anzeigt, dass sich das Datenpaket in der nächsten Bitgruppe fortsetzt.

6. Verfahren nach Anspruch 5, **dadurch gekennzeichnet, dass** in jeder Bitgruppe (1) innerhalb der für die Steuerdaten reservierten Bereiche (2, 4, 9, 10, 11, 12) eine oder mehrere bestimmte Bitpositionen (11) für den Merker vorgesehen werden.

7. Verfahren nach einem der vorherigen Ansprüche, **dadurch gekennzeichnet, dass** der Bereich (6) für die Quelldaten, die in einem kontinuierlichen Datenstrom übertragen werden, und der Bereich für die Daten (8), die in Datenpaketen übertragen werden, zusammen durch eine feste Anzahl von Bitpositionen innerhalb einer Bitgruppe (1) gebildet werden.

8. Verfahren nach Anspruch 7, **dadurch gekennzeichnet, dass** die Grenze (14) zwischen dem Bereich (6) für die Quelldaten, die in einem kontinuierlichen Datenstrom übertragen werden, und dem Bereich (8) für die Daten, die in Datenpaketen (13) übertragen werden, im laufenden Betrieb entsprechend der gerade benötigten Übertragungskapazität eingestellt wird,

9. Verfahren nach Anspruch 8, **dadurch gekennzeichnet, dass** für Quelldaten, die in einem kontinuierlichen Datenstrom übertragen werden, vorrangig Übertragungskapazität bereitgestellt wird.

10. Verfahren nach einem der vorherigen Anspräche, **dadurch gekennzeichnet, dass** der Bereich (6) innerhalb einer Bitgruppe (1), der für die Quelldaten reserviert ist, die in einem kontinuierlichen Datenstrom übertragen werden, in mehrere Teil-Bitgruppen (7) gleicher Länge unterteilt wird und dass abhängig von den Steuerdaten die jeder Teil-Bitgruppe zugewiesenen Quelldaten einem bestimmten Teilnehmer zugeordnet werden.

11. Verfahren nach einem der vorhergehenden Ansprüche, **dadurch gekennzeichnet, dass** ein Teilnehmer, der ein Datenpaket (13) sendet, dieses wieder aus dem Datenstrom löscht oder mit neuen Daten überschreibt, nachdem das Datenpaket nach einem Durchlauf durch das ringförmige Netz wieder bei diesem Teilnehmer angekommen ist.

12. Verfahren nach einem der vorhergehenden Ansprüche, **dadurch gekennzeichnet, dass** am Beginn des Bereichs (8) für asynchrone Daten jeder Bitgruppe (1) ein Datenfeld vorgesehen wird, das anzeigt, ob diese Bitgruppe mit asynchronen Daten belegt oder frei ist.

13. Verfahren nach Anspruch 12, dass die Datenpakete (13) durch einen bestimmten Teilnehmer, insbesondere denjenigen, der den Takt vorgibt, mit einer Markierung versehen werden und dass eine Kennzeichnung einer Bitgruppe (1) als mit asynchronen Daten belegt gelöscht wird, wenn zwei Datenpakete mit der gleichen Markierung erkannt werden.

14. Verfahren nach einem der vorhergehenden Ansprüche, **dadurch gekennzeichnet, dass** für eine gesamte Bitgruppe (1) 64 Bytes verwendet werden.

15. Verfahren nach einem der vorhergehenden Ansprüche, **dadurch gekennzeichnet, dass** jeweils mehrere, insbesondere 16 aufeinanderfolgende Bitgruppen (1) zu einem Block zusammengefasst werden.

16. Verfahren nach einem der vorhergehenden Ansprüche, **dadurch gekennzeichnet, dass** in jeder Bitgruppe (1) innerhalb der für die Steuerdaten reseivierten Bereiche ein Datenfeld (2) als Präambel vorgesehen ist, insbesondere zur Kennzeichnung des Beginns der Bitgruppe und gegebenenfalls eines Blockanfangs bzw. einer Zuordnung zwischen Teil-Bitgruppen (7) und bestimmten Teilnehmern.

17. Verfahren nach einem der vorhergehenden Ansprüche, **dadurch gekennzeichnet, dass** in jeder Bitgruppe (1) innerhalb der für die Steuerdaten reservierten Bereiche insbesondere 16 Kontroll-Bits (9) vorgesehen sind, die zur Übertragung von Kontrollnachrichten verwendet werden, wobei die Kontroll-Bits von jeweils mehreren, insbesondere 16 aufeinanderfolgenden Bitgruppen zu einer Kontrollnachricht zusammengefasst werden.

18. Verfahren nach einem der vorhergehenden Ansprüche, **dadurch gekennzeichnet, dass** in jeder Bitgruppe (1) innerhalb der für die Steuerdaten reservierten Bereiche einer bestimmten Bitposition eine Paritäts-Kennung (12) zugewiesen ist.

19. Verfahren nach einem der vorhergehenden Ansprüche, **dadurch gekennzeichnet, dass** in jeder Bitgruppe (1) innerhalb der für die Steuerdaten reservierten Bereiche ein mehrere, insbesondere 6 Bits umfassendes Datenfeld (10) vorgesehen ist, das einen Zählwert entsprechend der Position eines Teilnehmers in dem ringförmigen Kommunikationsnetz enthält.

20. Verfahren nach einem der vorhergehenden Ansprüche, **dadurch gekennzeichnet, dass** die Teilnehmer (20, 21, 22, 23) über Lichtleiter (24, 25, 26, 27) miteinander verbunden sind.

21. Verfahren nach einem der vorherigen Ansprüche, dass die einzelnen Bits mittels Biphase-Codierung codiert ist.

## Claims

1. A procedure for the combined transmission of digital source and control data between data sources and data sinks participating in a communications network with a ring structure, where the source and control data are transmitted in a format that specifies the clocked sequence of individual bit groups of equal length, in which for the source and control data transmitted in a continuous data stream synchronised to a clock signal, in each case, certain bit positions are reserved, **characterised in that** a contiguous region (8) of bit positions can be reserved for the source data within a bit group (1) of data transmitted in a data packet (13), which, in each case, has a start and a defined length and to which a participant address (15) is assigned, that the reserved bit positions for the source data transmitted in a continuous data stream form a contiguous region (6), that the region (8) for the source data transmitted in a continuous stream, and the region (8) for the data in data packets adjoin each other, and that in each bit group (1), a data field (4) is provided for information referring to the size of the region (6) for the source data in a continuous data stream or to the size of the region (8) for the data in data packets (13).

2. A procedure according to claim 1, **characterised in that that** address of the participant (15) is assigned to the start of the data packets (13).

3. A procedure according to claim 1 or 2, **characterised in that** a participant who sends data packets writes consecutive bits of a data packet to be transmitted in bit positions adjacent to each other that are reserved for the data transmitted in the data packet (13).

4. A procedure according to claim 3, **characterised in that** a data packet that contains more bit positions than the region (8) of a bit group (1) that is reserved for the data transmitted in data packets is transmitted in the areas reserved for data packets of several consecutive bit groups.

5. A procedure according to claim 4, **characterised in that** in a bit group (1) in which data are transmitted in a data packet that continues in a subsequently following bit group, a marker (11) is placed that indicates that the data packet continues in the next bit group.

6. A procedure according to claim 5, **characterised in that** in each bit group (1), within the regions (2, 4, 9, 10, 11, 12) reserved for the control data, one or more specific bit positions (11) are provided for the marker.

7. A procedure according to one of the preceding claims, **characterised in that** the region (6) for the source data transmitted in a continuous data stream and the region for the data (8) transmitted in data packets together form a fixed number of bit positions within a bit group (1).

8. A procedure according to claim 7, **characterised in that** the boundary (14) between the region (6) for the source data transmitted in a continuous data stream and the region (8) for the data transmitted in data packets (13) is adjusted in running operation to correspond to the currently required transmission capacity.

9. A procedure according to claim 8, **characterised in that** preferential transmission capacity is provided for source data transmitted in a continuous data stream.

10. A procedure according to one of the preceding claims, **characterised in that** the region (6) within a bit group (1) that is reserved for the source data transmitted in a continuous data stream, is subdivided into several partial bit groups (7) of the same length, and that, depending on the control data, the source data assigned to each partial bit group are associated with a specific participant.

11. A procedure according to one of the preceding claims, **characterised in that** a participant who sends a data packet (13) either deletes this from the data stream or overwrites it with new data after the data packet that have traveled through the ring-shaped network have arrived back to this participant.

12. A procedure according to one of the preceding claims, **characterised in that** at the beginning of the region (8) a data field is provided for asynchronous data of each bit group (1), that indicates whether this bit group contains asynchronous data, or is free.

13. A procedure according to claim 12, [**characterised in**] that the data packets (13) are provided with a marking by a specific participant, particularly the one who specifies the clock pulse, and that a marking of a bit group (1) as containing asynchronous data is deleted when two data packets are recognised with the same marking.

14. A procedure according to one of the preceding claims, **characterised in that** 64 bytes are used for one entire bit group (1).

15. A procedure according to one of the preceding claims, **characterised in that** in each case, several, in particular 16 consecutive bit groups (1) are combined to a block.

16. A procedure according to one of the preceding claims, **characterised in that** in each bit group (1) within the regions reserved for the control data, a data field (2) is provided as a preamble, especially to identify the beginning of the bit group and possibly the start of a block or an association between partial bit groups (7) and specific participants.

17. A procedure according to one of the preceding claims, **characterised in that** in each bit group (1) within the regions reserved for the control data, in particular, 16 control bits (9) are provided, which are used to transmit of control messages, whereby the control bits of, in each case several, in particular 16 consecutive bit groups are combined into a control message.

18. A procedure according to one of the preceding claims, **characterised in that** in each bit group (1) within the region reserved for the control data, a parity identification (12) is assigned to a specific bit position.

19. A procedure according to one of the preceding claims, **characterised in that** in each bit group (1) within the regions reserved for the control data, a data field (10) containing several, in particular 6 bits is provided that contains a counting value corresponding to the position of a participant in the ring-shaped communication network.

20. A procedure according to one of the preceding claims, **characterised in that** the participants (20, 21, 22, 23) are connected to one another by optical fibers (24, 25, 26, 27).

21. A procedure according to one of the preceding claims, [**characterised in**] that the individual bits are coded by means of biphase coding.

## Revendications

1. Procédé pour la transmission commune de données numériques sources et de commande, entre des sources et des collecteurs de données, qui sont des abonnés à un réseau de communication avec une structure annulaire, les données sources et les données de commande étant transmises dans un format qui prescrit une séquence cadencée de groupes de bits unitaires de même longueur, dans lesquels pour des données sources et des données de commande, qui sont transmises dans un flux de données continu, synchrone au signal de synchronisation, chaque fois des positions binaires déterminées sont réservées, **caractérisé en ce qu'**une zone cohérente (8) de positions binaires pour les données sources peut être réservée au sein d'un groupe de bits (1) pour des données, qui sont transmises par paquets de données (13), qui ont chacun un début et une longueur définie et auxquels est associée une adresse d'abonné (15), **en ce que** les positions binaires réservées pour les données sources, qui sont transmises dans un flux de données continu forment une zone cohérente (6) et **en ce que** la zone (6) pour les données sources qui sont transmises dans un flux de données continu et la zone (8) pour les données transmises par paquets sont adjacentes et **en ce que** dans chaque groupe de bits (1) est prévu un champ de données (4) pour des informations par rapport à la dimension de la zone (6) pour des données sources dans un flux de données continu ou à la dimension de la zone (8) pour les données par paquets de données (13).

2. Procédé selon la revendication 1, **caractérisé en ce que** l'adresse d'abonné (15) est associée au début des paquets de données (13).

3. Procédé selon la revendication 1 ou 2, **caractérisé en ce qu'**un abonné qui émet des paquets de données, écrit des bits consécutifs d'un paquet de données à transmettre dans des positions binaires voisines, qui sont réservées à des données qui sont transmises par paquets de données (13).

4. Procédé selon la revendication 3, **caractérisé en ce qu'**un paquet de données, qui contient plus de positions binaires que la zone (8) d'un groupe de bits (1) qui est réservée à des données qui sont transmises par paquets de données est transmis dans des zones réservées aux paquets de données de plusieurs groupes de bits consécutifs.

5. Procédé selon la revendication 4, **caractérisé en ce que** dans un groupe de bits (1), dans lequel sont transmises des données d'un paquet de données, qui se poursuit dans un groupe de bits suivant est placé un drapeau (11) qui montre que le paquet de données se poursuit dans le groupe de bits suivant.

6. Procédé selon la revendication 5, **caractérisé en ce que** dans chaque groupe de bits (1) au sein des zones réservées pour les données de commande (2, 4, 9, 10, 11, 12) sont prévues une ou plusieurs positions binaires déterminées (11) pour le drapeau.

7. Procédé selon l'une quelconque des revendications précédentes, **caractérisé en ce que** la zone (6) pour les données sources, qui sont transmises dans un flux de données continu et la zone pour les données (8) qui sont transmises par paquets de données sont formées ensemble par un nombre fixe de positions binaires au sein d'un groupe de bits (1).

8. Procédé selon la revendication 7, **caractérisé en ce que** la limite (14) entre la zone (6) pour les données sources qui sont transmises dans un flux de données continu et la zone (8) pour les données qui sont transmises par paquets de données (13) est réglée en cours de fonctionnement, en fonction de la capacité de transmission qui est justement nécessaire.

9. Procédé selon la revendication 8, **caractérisé en ce que** la capacité de transmission est mise à disposition prioritairement pour des données sources qui sont transmises dans un flux de données continu.

10. Procédé selon l'une quelconque des revendications précédentes, **caractérisé en ce que** la zone (6) au sein d'un groupe de bits (1) qui est réservée aux données sources qui sont transmises dans un flux de données continu est divisée en plusieurs groupes de bits partiels (7) de même longueur, et **en ce que**, en fonction des données de commande, les données sources affectées à chaque groupe de bits partiel sont associées à un certain abonné.

11. Procédé selon l'une quelconque des revendications précédentes, **caractérisé en ce qu'**un abonné, qui émet un paquet de données (13) efface de nouveau ce dernier du flux de données, ou l'écrase par de nouvelles données, une fois qu'après un passage dans le réseau annulaire, le paquet de données est de nouveau revenu chez ledit abonné.

12. Procédé selon l'une quelconque des revendications précédentes, **caractérisé en ce que**, au début de la zone (8) pour des données asynchrones de chaque groupe de bits (1) est prévu un champ de données, qui montre si ledit groupe de bits est occupé par des données asynchrones ou s'il est libre.

13. Procédé selon la revendication 12, **caractérisé en ce que** les paquets de données (13) sont munis d'un marquage par un certain abonné, notamment par celui-ci qui prescrit la cadence et **en ce qu'**une identification d'un groupe de bits (1) comme étant occupé par des données asynchrones est effacée lorsque deux paquets de données avec le même marquage sont reconnus.

14. Procédé selon l'une quelconque des revendications précédentes, **caractérisé en ce que** 64 octets sont utilisés pour l'ensemble d'un groupe de bits (1).

15. Procédé selon l'une quelconque des revendications précédentes, **caractérisé en ce que** respectivement plusieurs, notamment 16 groupes de bits (1) consécutifs sont regroupés en un bloc.

16. Procédé selon l'une quelconque des revendications précédentes, **caractérisé en ce que** dans chaque groupe de bits (1) un champ de données (2) est prévu en tant que préambule au sein des zones réservées aux données de commande, notamment pour l'identification du début du groupe de bits et le cas échéant d'un début de bloc ou d'une association entre des groupes de bits partiels (7) et certains abonnés.

17. Procédé selon l'une quelconque des revendications précédentes, **caractérisé en ce que** dans chaque groupe de bits (1), au sein des zones réservées aux données de commande sont prévus notamment 16 bits de contrôle (9), qui sont utilisés pour la transmission d'informations de commande, les bits de contrôle étant regroupés respectivement par plusieurs, notamment par 16 groupes de bits consécutifs en une information de contrôle.

18. Procédé selon l'une quelconque des revendications précédentes, **caractérisé en ce que** dans chaque groupe de bits (1), au sein des zones réservées aux données de commande, une identification de parité (12) est affectée à une certaine position binaire.

19. Procédé selon l'une quelconque des revendications précédentes, **caractérisé en ce que** dans chaque groupe de bits (1), au sein des zones réservées aux données de commande, est prévu un champ de données (10) comprenant plusieurs, notamment 6 bits, qui contient une valeur numérique correspondant à la position d'un abonné dans le réseau de communication annulaire.

20. Procédé selon l'une quelconque des revendications précédentes, **caractérisé en ce que** les abonnés (20, 21, 22, 23) sont reliés entre eux par l'intermédiaire de guides d'ondes optiques (24, 25, 26, 27).

21. Procédé selon l'une quelconque des revendications précédentes, **caractérisé en ce que** les bits unitaires sont codés au moyen d'un codage biphase.
